# EUROPEAN PATENT APPLICATION

(11) **EP 4 510 699 A1**
(43) Date of publication of application: **19.02.2025**
(21) Application number: 22936806.3
(22) Date of filing: 12.04.2022
(51) Int. Cl.: H04W 36/00, H04W 56/00, H04W 84/06, H04W 24/10

(54) **METHOD AND APPARATUS FOR TRANSMITTING MEASUREMENT CAPABILITY, AND READABLE STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2022/086350
(87) International publication number: WO 2023/197151

(57) **Abstract**

Provided are a method and apparatus for transmitting a measurement capability, and a readable storage medium, which are applied to the technical field of wireless communications. The method comprises: sending measurement capability indication information to a network device, wherein the measurement capability indication information is used for indicating whether a user equipment supports the measurement capability of simultaneously measuring cells for N different satellites in the same measurement window when performing neighboring cell measurement, and N is an integer greater than 1. In the present disclosure, a user equipment sends measurement capability indication information to a network device to give notification of whether the measurement capability of simultaneously measuring cells for N different satellites in the same measurement window when neighboring cell measurement is performed is supported, such that the network device accurately learns of a measurement capability of the user equipment, so as to apply the measurement capability to appropriate scheduling processing.

## Description

### TECHNICAL FIELD

The present invention relates to the field of wireless communication technologies, and in particular to a measurement capability transmission method, a measurement capability transmission apparatus and a readable storage medium.

### BACKGROUND

In a non-terrestrial network (NTN) system, how to make a network device more accurately aware of a terminal capability, especially a measurement capability, of user equipment (UE) is a technical problem to be solved.

### SUMMARY

The present invention provides a measurement capability transmission method, a measurement capability transmission apparatus and a readable storage medium.

In a first aspect, a measurement capability sending method is provided, performed by user equipment (UE) and the measurement capability sending method including:
sending measurement capability indication information to a network device, wherein the measurement capability indication information indicates a measurement capability of whether the UE supports simultaneous measurements on cells corresponding to N different satellites within a same measurement window when performing a neighbor cell measurement, and wherein N is an integer greater than 1.

In some possible implementations, the method further includes:
sending a neighbor cell measurement report to the network device, wherein the neighbor cell measurement report includes measurement results of the simultaneous measurements on the cells corresponding to the N different satellites within the same measurement window.

In some possible implementations, at least two of the N different satellites correspond to different satellite types, wherein different satellite types correspond to different satellite orbit altitude ranges.

In some possible implementations, the cells corresponding to the N different satellites are intra-frequency cells, or the cells corresponding to at least two of the N different satellites are inter-frequency cells.

In a second aspect, a measurement capability receiving method is provided, performed by a network device and the measurement capability receiving method including:
receiving measurement capability indication information from UE, wherein the measurement capability indication information indicates a measurement capability of whether the UE supports simultaneous measurements on cells corresponding to N different satellites within a same measurement window when performing a neighbor cell measurement, and wherein N is an integer greater than 1.

In some possible implementations, the method further includes:
receiving a neighbor cell measurement report from the UE, wherein the neighbor cell measurement report includes measurement results of the simultaneous measurements on the cells corresponding to the N different satellites within the same measurement window.

In some possible implementations, at least two of the N different satellites correspond to different satellite types, wherein different satellite types correspond to different satellite orbit altitude ranges.

In some possible implementations, the cells corresponding to the N different satellites are intra-frequency cells, or the cells corresponding to at least two of the N different satellites are inter-frequency cells.

In a third aspect, a communication apparatus is provided. The communication apparatus may be configured to perform the step(s) performed by the UE in the first aspect or any possible design of the first aspect. The UE may implement various functions of the various methods by means of hardware structures, software modules, or a combination of hardware structures and software modules.

When implemented in the way of the first aspect by means of software modules, the communication apparatus may include a transceiving module.

The transceiving module is configured to send measurement capability indication information to a network device, wherein the measurement capability indication information indicates a measurement capability of whether the UE supports simultaneous measurements on cells corresponding to N different satellites within a same measurement window when performing a neighbor cell measurement, and wherein N is an integer greater than 1.

In a fourth aspect, a communication apparatus is provided. The communication apparatus may be configured to perform the step(s) performed by the network device in the second aspect or any possible design of the second aspect. The network device may implement various functions of the various methods by means of hardware structures, software modules, or a combination of hardware structures and software modules.

When implemented in the way of the second aspect by means of software modules, the communication apparatus may include a transceiving module.

The transceiving module is configured to receive measurement capability indication information from UE, wherein the measurement capability indication information indicates a measurement capability of whether the UE supports simultaneous measurements on cells corresponding to N different satellites within a same measurement window when performing a neighbor cell measurement, and wherein N is an integer greater than 1.

In a fifth aspect, an electronic device is provided, including one or more processors and one or more memories. The one or more memories are configured to store a computer program, and the one or more processors are configured to execute the computer program to implement the first aspect or any possible design of the first aspect.

In a sixth aspect, a communication device is provided, including one or more processors and one or more memories. The one or more memories are configured to store a computer program, and the one or more processors are configured to execute the computer program to implement the second aspect or any possible design of the second aspect.

In a seventh aspect, a computer-readable storage medium is provided, in which instructions (or called a computer program or a program) are stored. When called and executed on a computer, the instructions enable the computer to perform the first aspect or any possible design of the first aspect.

In an eighth aspect, a computer-readable storage medium is provided, in which instructions (or called a computer program or a program) are stored. When called and executed on a computer, the instructions enable the computer to perform the second aspect or any possible design of the second aspect.

In the present invention, by sending measurement capability indication information to a network device, UE inform a measurement capability of whether to support simultaneous measurements on cells corresponding to N different satellites within a same measurement window when performing a neighbor cell measurement, so that the network device accurately learns the measurement capability of the UE, and thereby applies the measurement capability to appropriate scheduling processing.

It is to be understood that the foregoing general description and the following detailed description are exemplary and explanatory only and are not restrictive of the present invention.

### BRIEF DESCRIPTION OF THE DRAWINGS

The drawings described herein are used to provide further understanding of the present invention and constitute a part of the present invention. The examples of the present invention and their descriptions are used to explain the present invention and do not constitute improper limitations on the present invention. In the drawings,
the accompanying drawings, which are incorporated in and constitute a part of this specification, illustrate examples consistent with the present invention and, together with the description, serve to explain the principles of the present invention.
FIG. 1 is a schematic structural diagram of a wireless communication system provided in an example of the present invention.
FIG. 2 illustrates a schematic diagram of a measurement capability transmission method according to an example.
FIG. 3 illustrates a schematic diagram of a specific illustration according to an example.
FIG. 4 illustrates a schematic diagram of another specific illustration according to an example.
FIG. 5 illustrates a schematic diagram of another specific illustration according to an example.
FIG. 6 illustrates a schematic diagram of another specific illustration according to an example.
FIG. 7 illustrates a schematic diagram of another specific illustration according to an example.
FIG. 8 illustrates a schematic diagram of a measurement capability sending method according to an example.
FIG. 9 illustrates a schematic diagram of a measurement capability sending method according to an example.
FIG. 10 illustrates a schematic diagram of a measurement capability receiving method according to an example.
FIG. 11 illustrates a schematic diagram of a measurement capability receiving method according to an example.
FIG. 12 illustrates a schematic diagram of a measurement capability sending apparatus according to an example.
FIG. 13 illustrates a schematic diagram of a measurement capability sending device according to an example.
FIG. 14 illustrates a schematic diagram of a measurement capability receiving apparatus according to an example.
FIG. 15 illustrates a schematic diagram of a measurement capability receiving device according to an example.

### DETAILED DESCRIPTION OF THE EMBODIMENTS

Examples of the present invention are further described in conjunction with the accompanying drawings and the detailed description.

The examples will be described in detail herein, whose illustrations are illustrated in the accompanying drawings. Where the following descriptions involve the drawings, like numerals in different drawings refer to like or similar elements unless otherwise indicated. The implementations described in the following examples do not represent all implementations consistent with the present invention. Rather, they are merely examples of apparatuses and methods consistent with some aspects of the present invention as detailed in the appended claims.

The terms used in the examples of the present invention are for the purpose of describing particular examples only, and are not intended to limit the examples of the present invention. Terms determined by "a" and "the" in their singular forms used in the examples of the present invention and the appended claims are also intended to include their plural forms, unless clearly indicated otherwise in the context. It is also to be understood that the term "and/or" as used herein is and includes any and all possible combinations of one or more of the associated listed items.

It is to be understood that, although terms "first," "second," "third," and the like may be adopted in the examples of the present invention to describe various information, such information should not be limited to these terms. These terms are only used to distinguish the information of the same type with each other. For example, without departing from the scope of the examples of the present invention, first information may be referred as second information; and similarly, second information may also be referred as first information. Depending on the context, the word "if" as used herein may be interpreted as "when," "upon," or "in response to determining."

The following describes in detail the examples of the present invention. Illustrations of the examples are illustrated in the accompanying drawings, with the same or similar reference numerals referring to the same or similar elements throughout. The examples, which are described below with reference to the accompanying drawings, are illustrated and are intended to explain the present invention, but should not be construed as a limitation of the present invention.

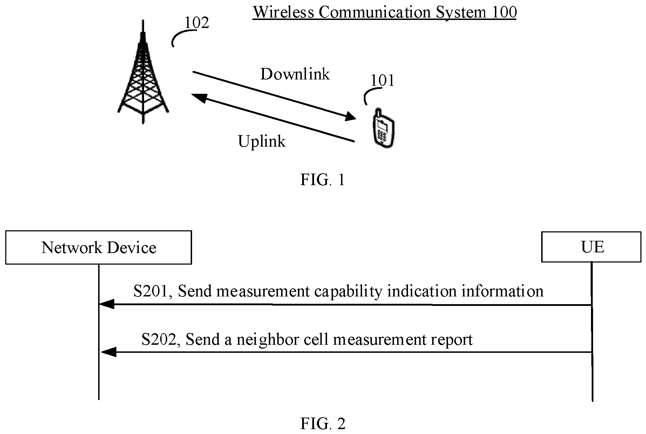

As illustrated in FIG. 1, a measurement capability transmission method provided in an example of the present invention may be applied to a wireless communication system 100. The wireless communication system 100 may include, but is not limited to, a network device 101 and user equipment (UE) 102. The UE 102 is configured to support carrier aggregation. The UE 102 may connect to multiple carrier units of the network device 101, including a primary carrier unit and one or more secondary carrier units.

It is to be understood that the wireless communication system 100 is applicable to both low-frequency scenarios and high-frequency scenarios. Application scenarios of the wireless communication system 100 include, but are not limited to, a long term evolution (LTE) system, a LTE frequency division duplex (FDD) system, a LTE time division duplex (TDD) system, a worldwide interoperability for micro wave access (WiMAX) communication system, a cloud radio access network (CRAN) system, a future fifth-generation (5G) system, a new radio (NR) communication system or a future evolved public land mobile network (PLMN) system, etc.

The UE 102 illustrated above may be user equipment, a terminal, an access terminal, a terminal unit, a terminal station, a mobile station (MS), a remote station, a remote terminal, a mobile terminal, a wireless communication device, a terminal agent or a user device, etc. The UE 102 may be equipped with a wireless transceiving function, and may perform communications (such as wireless communications) with one or more network devices 101 of one or more communication systems, and receive network services provided by the one or more network devices 101. The network device 101 here includes, but is not limited to, the base station illustrated in the drawing.

The UE 102 may be a cellular phone, a cordless phone, a session initiation protocol (SIP) phone, a wireless local loop (WLL) station, a personal digital assistant (PDA) device, a handheld device with a wireless communication function, a computing device or another processing device connected to a wireless modem, a vehicle-mounted device, a wearable device, UE in a future 5G network, or UE in a future evolved PLMN network, etc.

The network device 101 may be an access network device (or called an access network node). The access network device refers to a device that provides a network access function, for example, a radio access network (RAN) base station, etc. The network device may specifically include a base station (BS) device, or include the BS device and a radio resource management device for controlling the BS device, etc. The network device may also include a relay station (a relay device), an access point, a BS in the future 5G network, a BS in the future evolved PLMN network, or a NR BS, etc. The network device may be a wearable device or a vehicle-mounted device. The network device may be a communication chip having a communication module.

For example, the network device 101 includes, but is not limited to, a next-generation gnodeB (gNB) in 5G, an evolved node B (eNB) in an LTE system, a radio network controller (RNC), a node B (NB) in a WCDMA system, a radio controller under a CRAN system, a BS controller (BSC), a base transceiver station (BTS) in a GSM system or a CDMA system, a home BS (for example, a home evolved nodeB or a home node B (HNB)), a baseband unit (BBU), a transmitting and receiving point (TRP), a transmitting point (TP) or a mobile switching center, etc.

An example of the present invention provides a measurement capability transmission method. FIG. 2 illustrates a flowchart of a measurement capability transmission method according to an example. As illustrated in FIG. 2, the method includes steps S201-S202.

At step S201, UE sends measurement capability indication information to a network device.

The measurement capability indication information sent from the UE to the network device indicates a measurement capability of whether the UE supports simultaneous measurements on cells corresponding to N different satellites within a same measurement window when performing a neighbor cell measurement, where N is an integer greater than 1.

In some possible implementations, the same measurement window is a synchronization signal block (SSB)-based radio resource management (RRM) measurement timing configuration window (SMTC) used by the UE when performing the neighbor cell measurement.

In some possible implementations, the same measurement window is a channel state information reference signal (CSI-RS) based measurement timing configuration window (CMTC) used by the UE when performing the neighbor cell measurement.

In some possible implementations, any two of the N different satellites correspond to different satellite types. The different satellite types correspond to different satellite orbit altitude ranges.

The satellite types includes at least one of the following types: a low earth orbit (LEO), which is a near-circular orbit about 200 to 1,200 kilometers from the ground; a medium earth orbit (MEO), which is a circular orbit about 1,200 to 36,000 kilometers from the ground; a geosynchronous orbit (GEO), also known as a high earth orbit (HEO), which is a circular orbit about 36,000 kilometers from the ground; a geostationary orbit (GSO), which is a geosynchronous orbit about 36,000 kilometers from the ground and with an angle of 0° between the orbital plane and the equatorial plane; or a non-geostationary orbit (NGSO), which is an orbit that is not synchronized with the earth.

The satellite types may include only the LEO, the MEO or the GEO, or include only the GSO or the NGSO, or include a combination of two types. For example, the satellite type of one satellite is both NGSO and LEO, or the satellite type of one satellite is both NGSO and MEO.

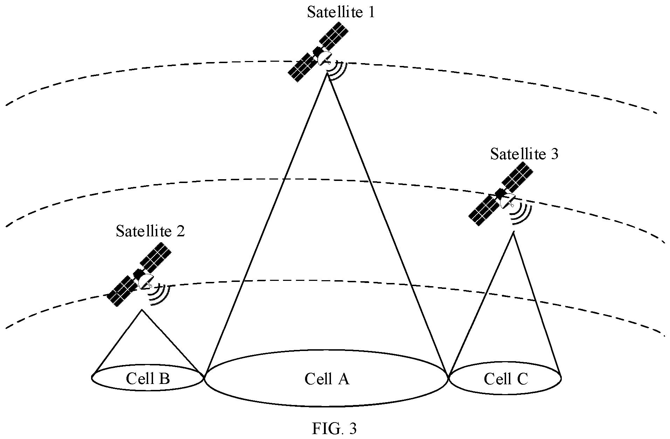

In an illustration as illustrated in FIG. 3, the UE resides in Cell A covered by Satellite 1 of the GEO-type, and its neighbor cells include: Cell B covered by Satellite 2 of the LEO-type, and Cell C covered by Satellite 3 of the MEO-type.

The UE may simultaneously measure Cell B and Cell C of different satellite types within the same measurement window.

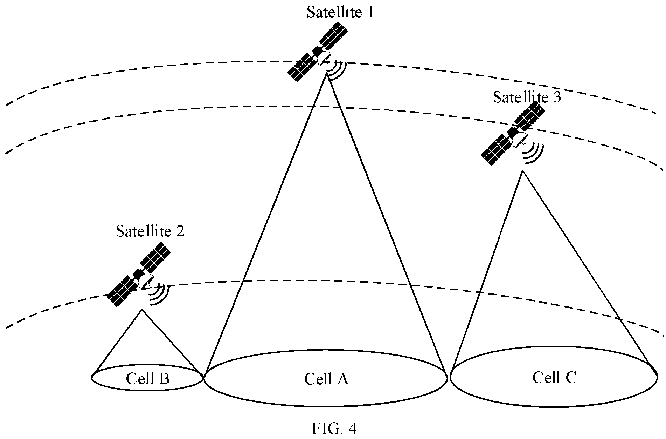

In an illustration as illustrated in FIG. 4, the UE resides in Cell A covered by Satellite 1 of the GEO-type, and its neighbor cells include: Cell B covered by Satellite 2 of the NGSO-type, and Cell C covered by Satellite 3 of the GSO-type.

The UE may simultaneously measure Cell B and Cell C of different satellite types within the same measurement window.

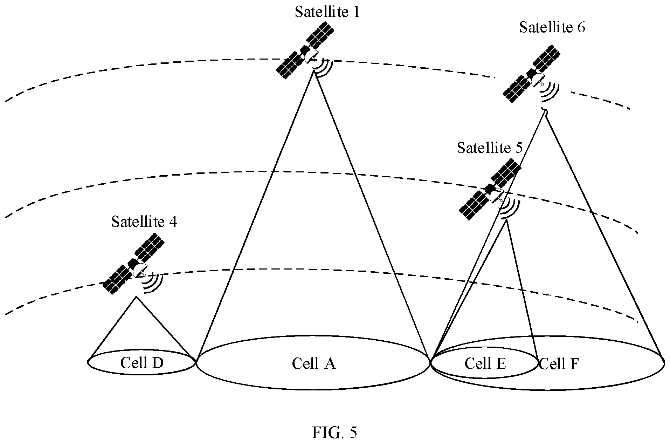

In an illustration as illustrated in FIG. 5, the UE resides in Cell A covered by Satellite 1 of the GEO-type, and its neighbor cells include: Cell D covered by Satellite 4 of the LEO-type, Cell E covered by Satellite 5 of the MEO-type, and Cell F covered by Satellite 6 of the GEO-type.

The UE may simultaneously measure Cell D, Cell E and Cell F of different satellite types within the same measurement window.

In some possible implementations, at least two of the N different satellites correspond to different satellite types, with different satellite types corresponding to different satellite orbit altitude ranges.

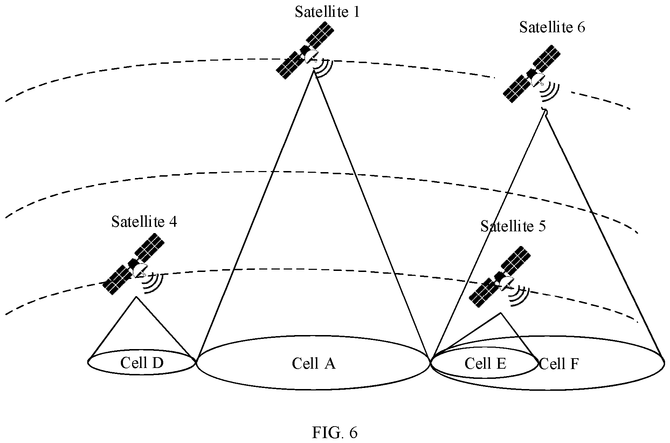

In an illustration as illustrated in FIG. 6, the UE resides in Cell A covered by Satellite 1 of the GEO-type, and its neighbor cells include: Cell D covered by Satellite 4 of the LEO-type, Cell E covered by Satellite 5of the LEO-type, and Cell F covered by Satellite 6 of the GEO-type.

The UE may simultaneously measure Cell D, Cell E and Cell F within the same measurement window.

Since different neighbor cells correspond to different satellite orbits, the terminal may not receive signals from the satellites in different orbits at the same time, and may not measure the satellites in different orbits within the same measurement window. In this case, it is to measure the satellites in different orbits in sequence, resulting in different measurement delays and different generated measurement reports. In these implementations, the UE sends to the network device the measurement capability of whether it supports the simultaneous measurements on the cells corresponding to the N different satellites within the same measurement window when performing the neighbor cell measurement, and at least two of the N different satellites correspond to different satellite types, so that the network device accurately learns the measurement capability of the UE, and thereby applies the measurement capability to appropriate scheduling processing.

In some possible implementations, the N different satellites correspond to the same satellite type, with different satellite types corresponding to different satellite orbit altitude ranges.

In some possible implementations, at least two of the N different satellites correspond to the same satellite types, with different satellite types corresponding to different satellite orbit altitude ranges.

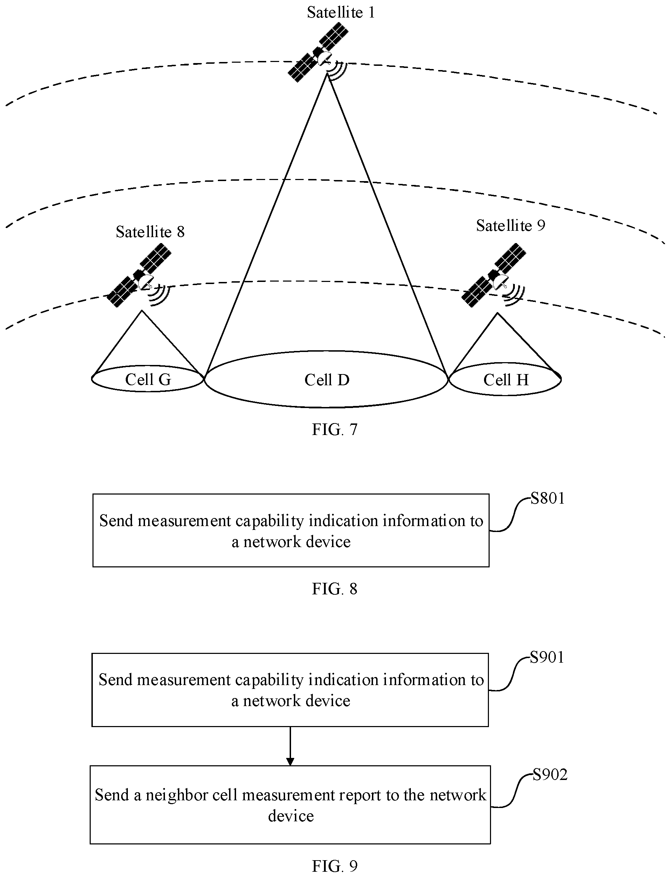

In an illustration as illustrated in FIG. 7, the UE resides in Cell A covered by Satellite 1 of the GEO-type, and its neighbor cells include: Cell G covered by Satellite 8 of the LEO-type, and Cell H covered by Satellite 9 of the LEO-type.

The UE may simultaneously measure Cell G and Cell H of the same satellite type within the same measurement window.

In some possible implementations, the cells corresponding to the N different satellites are intra-frequency cells. Alternatively, the cells corresponding to at least two of the N different satellites are inter-frequency cells.

At step S202, the UE sends a neighbor cell measurement report to the network device.

The neighbor cell measurement report sent from the UE to the network device includes measurement results of the simultaneous measurements on the cells corresponding to the N different satellites within the same measurement window.

In the examples of the present invention, by sending the measurement capability indication information to the network device, the UE informs the measurement capability of whether to support the simultaneous measurements on the cells corresponding to the N different satellites within the same measurement window when performing the neighbor cell measurement, so that the network device accurately learns the measurement capability of the UE, and thereby applies the measurement capability to appropriate scheduling processing.

An example of the present invention provides a measurement capability sending method, which is performed by UE. FIG. 8 illustrates a flowchart of a measurement capability sending method according to an example. As illustrated in FIG. 8, the method includes the following step.

At step S801, the UE sends measurement capability indication information to a network device.

The measurement capability indication information sent from the UE to the network device indicates a measurement capability of whether the UE supports simultaneous measurements on cells corresponding to N different satellites within a same measurement window when performing a neighbor cell measurement, where N is an integer greater than 1.

In some possible implementations, the same measurement window is an SSB-based RRM measurement timing configuration window (SMTC) used by the UE when performing the neighbor cell measurement.

In some possible implementations, the same measurement window is a CSI-RS based measurement timing configuration window (CMTC) used by the UE when performing the neighbor cell measurement.

In some possible implementations, any two of the N different satellites correspond to different satellite types, with the different satellite types corresponding to different satellite orbit altitude ranges.

The satellite types include at least one of the following types: an LEO, which is a near-circular orbit about 200 to 1,200 kilometers from the ground; an MEO, which is a circular orbit about 1,200 to 36,000 kilometers from the ground; a GEO, also known as an HEO, which is a circular orbit about 36,000 kilometers from the ground; a GSO, which is a geosynchronous orbit about 36,000 kilometers from the ground and with an angle of 0° between the orbital plane and the equatorial plane; or an NGSO, which is an orbit that is not synchronized with the earth.

The satellite types may include only the LEO, the MEO or the GEO, or include only the GSO or the NGSO, or include a combination of two types. For example, the satellite type of one satellite is both NGSO and LEO, or the satellite type of one satellite are both NGSO and MEO.

In an illustration as illustrated in FIG. 3, the UE resides in Cell A covered by Satellite 1 of the GEO-type, and its neighbor cells include: Cell B covered by Satellite 2 of the LEO-type, and Cell C covered by Satellite 3 of the MEO-type.

The UE may simultaneously measure Cell B and Cell C of different satellite types within the same measurement window.

In an illustration as illustrated in FIG. 4, the UE resides in Cell A covered by Satellite 1 of the GEO-type, and its neighbor cells include: Cell B covered by Satellite 2 of the NGSO-type, and Cell C covered by Satellite 3 of the GSO-type.

The UE may simultaneously measure Cell B and Cell C of different satellite types within the same measurement window.

In an illustration as illustrated in FIG. 5, the UE resides in Cell A covered by Satellite 1 of the GEO-type, and its neighbor cells include: Cell D covered by Satellite 4 of the LEO-type, Cell E covered by Satellite 5 of the MEO-type, and Cell F covered by Satellite 6 of the GEO-type.

The UE may simultaneously measure Cell D, Cell E and Cell F of different satellite types within the same measurement window.

In some possible implementations, at least two of the N different satellites correspond to different satellite types, with different satellite types corresponding to different satellite orbit altitude ranges.

In an illustration as illustrated in FIG. 6, the UE resides in Cell A covered by Satellite 1 of the GEO-type, and its neighbor cells include: Cell D covered by Satellite 4 of the LEO-type, Cell E covered by Satellite 5 of the LEO-type, and Cell F covered by Satellite 6 of the GEO-type.

The UE may simultaneously measure Cell D, Cell E and Cell F within the same measurement window.

Since different neighbor cells correspond to different satellite orbits, the terminal may not receive signals from the satellites in different orbits at the same time, and may not measure the satellites in different orbits within the same measurement window. In this case, it is to measure the satellites in different orbits in sequence, resulting in different measurement delays and different generated measurement reports. In these implementations, the UE sends to the network device the measurement capability of whether it supports the simultaneous measurements on the cells corresponding to the N different satellites within the same measurement window when performing the neighbor cell measurement, and at least two of the N different satellites correspond to different satellite types, so that the network device accurately learns the measurement capability of the UE, and thereby applies the measurement capability to appropriate scheduling processing.

In some possible implementations, the N different satellites correspond to the same satellite type, with different satellite types corresponding to different satellite orbit altitude ranges.

In some possible implementations, at least two of the N different satellites correspond to the same satellite types, with different satellite types corresponding to different satellite orbit altitude ranges.

In an illustration as illustrated in FIG. 7, the UE resides in Cell A covered by Satellite 1 of the GEO-type, and its neighbor cells include: Cell G covered by Satellite 8 of the LEO-type, and Cell H covered by Satellite 9 of the LEO-type.

The UE may simultaneously measure Cell G and Cell H of the same satellite type within the same measurement window.

In some possible implementations, the cells corresponding to the N different satellites are intra-frequency cells. Alternatively, the cells corresponding to at least two of the N different satellites are inter-frequency cells.

In the examples of the present invention, by sending the measurement capability indication information to the network device, the UE informs the measurement capability of whether to support the simultaneous measurements on the cells corresponding to the N different satellites within the same measurement window when performing the neighbor cell measurement, so that the network device accurately learns the measurement capability of the UE, and thereby applies the measurement capability to appropriate scheduling processing.

An example of the present invention provides a measurement capability sending method, which is performed by UE. FIG. 9 illustrates a flowchart of a measurement capability sending method according to an example. As illustrated in FIG. 9, the method includes the following steps.

At step S901, measurement capability indication information is sent to a network device.

The measurement capability indication information sent by the UE indicates a measurement capability of whether the UE supports simultaneous measurements on cells corresponding to N different satellites within a same measurement window when performing a neighbor cell measurement, where N is an integer greater than 1.

At step S902, a neighbor cell measurement report is sent to the network device.

The neighbor cell measurement report sent from the UE to the network device includes measurement results of the simultaneous measurements on the cells corresponding to the N different satellites within the same measurement window.

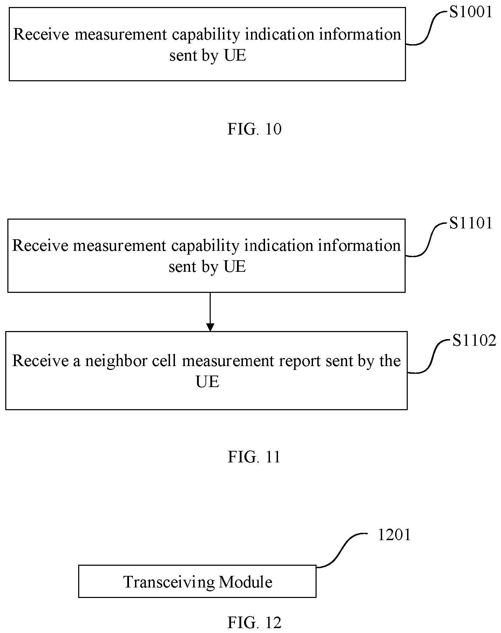

An example of the present invention provides a measurement capability receiving method, which is performed by a network device. FIG. 10 illustrates a flowchart of a measurement capability receiving method according to an example. As illustrated in FIG. 10, the method includes the following step.

At step S1001, measurement capability indication information sent by UE is received.

The received measurement capability indication information indicates a measurement capability of whether the UE supports simultaneous measurements on cells corresponding to N different satellites within a same measurement window when performing a neighbor cell measurement, where N is an integer greater than 1.

In some possible implementations, the same measurement window is an SSB-based RRM measurement timing configuration window (SMTC) used by the UE when performing the neighbor cell measurement.

In some possible implementations, the same measurement window is a CSI-RS based measurement timing configuration window (CMTC) used by the UE when performing the neighbor cell measurement.

In some possible implementations, any two of the N different satellites correspond to different satellite types, with the different satellite types corresponding to different satellite orbit altitude ranges.

The satellite types include at least one of the following types: an LEO, which is a near-circular orbit about 200 to 1,200 kilometers from the ground; an MEO, which is a circular orbit about 1,200 to 36,000 kilometers from the ground; a GEO, also known as an HEO, which is a circular orbit about 36,000 kilometers from the ground; a GSO, which is a geosynchronous orbit about 36,000 kilometers from the ground and with an angle of 0° between the orbital plane and the equatorial plane; or an NGSO, which is an orbit that is not synchronized with the earth.

The satellite types may include only the LEO, the MEO or the GEO, or include only the GSO or the NGSO, or include a combination of two types. For example, the satellite type of one satellite is both NGSO and LEO, or the satellite type of one satellite are both NGSO and MEO.

The illustrations illustrated as FIG. 3, FIG. 4 and FIG. 5 have the same descriptions as the above examples, which are not repeated here.

In some possible implementations, at least two of the N different satellites correspond to different satellite types, with different satellite types corresponding to different satellite orbit altitude ranges.

The illustration illustrated as FIG. 6 has the same descriptions as the above example, which is not repeated here.

Since different neighbor cells correspond to different satellite orbits, the terminal may not receive signals from the satellites in different orbits at the same time, and may not measure the satellites in different orbits within the same measurement window. In this case, it is to measure the satellites in different orbits in sequence, resulting in different measurement delays and different generated measurement reports. In these implementations, the UE sends to the network device the measurement capability of whether it supports the simultaneous measurements on the cells corresponding to the N different satellites within the same measurement window when performing the neighbor cell measurement, and at least two of the N different satellites correspond to different satellite types, so that the network device accurately learns the measurement capability of the UE, and thereby applies the measurement capability to appropriate scheduling processing.

In some possible implementations, the N different satellites correspond to the same satellite type, with different satellite types corresponding to different satellite orbit altitude ranges.

In some possible implementations, at least two of the N different satellites correspond to the same satellite type, with different satellite types corresponding to different satellite orbit altitude ranges.

The illustration illustrated as FIG. 7 has the same descriptions as the above example, which is not repeated here.

In the example of the present invention, by receiving the measurement capability indication information sent by the UE, the network device is informed the measurement capability of whether the UE supports the simultaneous measurements on the cells corresponding to the N different satellites within the same measurement window when performing the neighbor cell measurement, so that the network device accurately learns the measurement capability of the UE, and thereby applies the measurement capability to appropriate scheduling processing.

An example of the present invention provides a measurement capability receiving method, which is performed by a network device. FIG. 11 illustrates a flowchart of a measurement capability receiving method according to an example. As illustrated in FIG. 11, the method includes the following steps.

At step S1101, measurement capability indication information sent by UE is received.

The received measurement capability indication information indicates a measurement capability of whether the UE supports simultaneous measurements on cells corresponding to N different satellites within a same measurement window when performing a neighbor cell measurement, where N is an integer greater than 1.

At step S1102, a neighbor cell measurement report sent by the UE is received.

The neighbor cell measurement report sent from the UE to the network device includes measurement results of the simultaneous measurements on the cells corresponding to the N different satellites within the same measurement window.

Based on the same concept as the method examples, the present invention also provides an electronic apparatus. The electronic apparatus may be equipped with the functions of the UE 102 in the method examples and is configured to perform the step(s) performed by the UE 102 provided in the above examples. The functions may be implemented by hardware, or by corresponding software executed by hardware. The hardware or software includes one or more modules corresponding to the above functions.

In a possible implementation, the electronic apparatus 1200 as illustrated in FIG. 12 may serve as the UE 102 involved in the above method examples, and perform the step(s) performed by the UE 102 in a method example.

The communication apparatus 1200 includes a transceiving module 1201, which is configured to send measurement capability indication information to a network device. The measurement capability indication information indicates a measurement capability of whether the UE supports simultaneous measurements on cells corresponding to N different satellites within a same measurement window when performing a neighbor cell measurement, where N is an integer greater than 1.

The transceiving module 1201 is further configured to send a neighbor cell measurement report to the network device. The neighbor cell measurement report includes measurement results of the simultaneous measurements on the cells corresponding to the N different satellites within the same measurement window.

In some possible implementations, at least two of the N different satellites correspond to different satellite types, with different satellite types corresponding to different satellite orbit altitude ranges.

In some possible implementations, the cells corresponding to the N different satellites are intra-frequency cells. Alternatively, the cells corresponding to at least two of the N different satellites are inter-frequency cells.

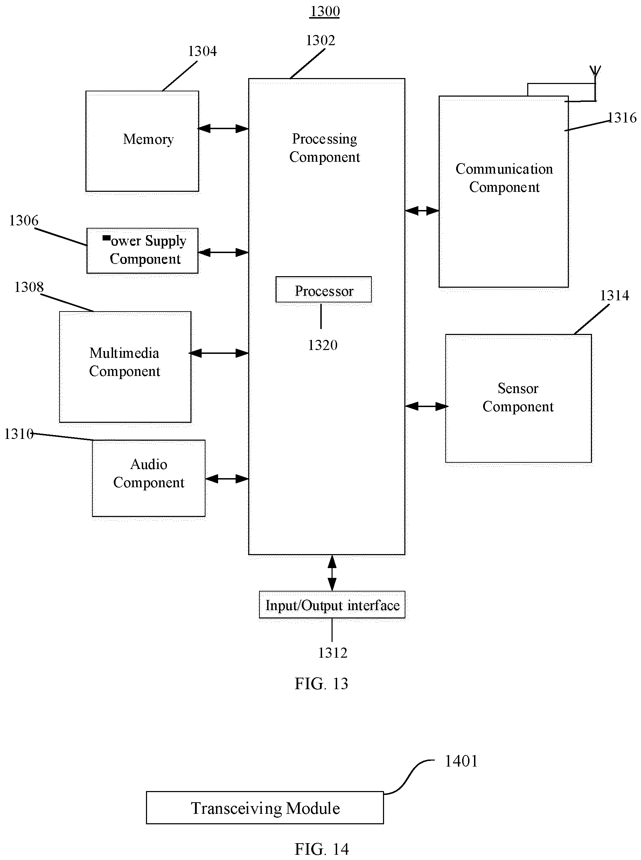

When being the UE 102, the electronic apparatus may further include the device as illustrated in FIG. 13.

Referring to FIG. 13, the device 1300 may include one or more of the following components: a processing component 1302, a memory 1304, a power supply component 1306, a multimedia component 1308, an audio component 1310, an input/output (I/O) interface 1312, a sensor component 1314, and a communication component 1316.

The processing component 1302 generally controls the overall operations of the device 1300, such as operations associated with display, phone calls, data communications, camera operations, and recording operations. The processing component 1302 may include one or more processors 1320 to execute instructions to complete all or a part of the steps of the above methods. In addition, the processing component 1302 may include one or more modules which facilitate the interaction between the processing component 1302 and other components. As an example, the processing component 1302 may include a multimedia module to facilitate the interaction between the multimedia component 1308 and the processing component 1302.

The memory 1304 is configured to store various types of data to support the operations of the device 1300. Examples of such data include instructions for any application or method operated on the device 1300, contact data, phonebook data, messages, pictures, videos, and the like. The memory 1304 may be implemented by any type of volatile or non-volatile storage device or a combination thereof, such as a static random access memory (SRAM), an electrically erasable programmable read-only memory (EEPROM), an erasable and programmable read-only memory (EPROM), a programmable read-only memory (PROM), a read-only memory (ROM), a magnetic memory, a flash memory, a magnetic disk or an optical disk.

The power supply component 1306 provides power for various components of the device 1300. The power supply component 1306 may include a power management system, one or more power supplies, and other components associated with generating, managing, and distributing power for the device 1300.

The multimedia component 1308 includes a screen providing an output interface between the device 1300 and a user. In some examples, the screen may include a liquid crystal display (LCD) and a touch panel (TP). If the screen includes the TP, the screen may be implemented as a touch screen to receive input signals from the user. The TP may include one or more touch sensors to sense touches, swipes, and gestures on the TP. The touch sensors may not only sense a boundary of a touch or swipe, but also sense a lasting time and a pressure associated with the touch or swipe. In some examples, the multimedia component 1308 includes a front camera and/or a rear camera. The front camera and/or rear camera may receive external multimedia data when the device 1300 is in an operating mode, such as a photographing mode or a video mode. Each front camera and rear camera may be a fixed optical lens system or have focal length and optical zooming capability.

The audio component 1310 is configured to output and/or input audio signals. For example, the audio component 1310 includes a microphone (MIC) that is configured to receive an external audio signal when the device 1300 is in an operating mode, such as a call mode, a recording mode, and a voice recognition mode. The received audio signal may be further stored in memory 1304 or transmitted via communication component 1316. In some examples, the audio component 1310 also includes a speaker for outputting audio signals.

The I/O interface 1312 provides an interface between the processing component 1302 and a peripheral interface module. The above peripheral interface module may be a keyboard, a click wheel, buttons, or the like. These buttons may include but not limited to a home button, a volume button, a start button and a lock button.

The sensor component 1314 includes one or more sensors to provide the device 1300 with status assessments in various aspects. For example, the sensor component 1314 may detect an open/closed state of the device 1300 and a relative positioning of components such as the display and keypad of the device 1300, and the sensor component 1314 may also detect a change in position of the device 1300 or a component of the device 1300, the presence or absence of user contact with the device 1300, orientation or acceleration/deceleration of the device 1300, and temperature change of the device 1300. The sensor component 1314 may include a proximity sensor configured to detect the presence of a nearby object without any physical contact. The sensor component 1314 may also include a light sensor, such as a CMOS or CCD image sensor, for being applied in imaging applications. In some examples, the sensor component 1314 may also include an acceleration sensor, a gyro sensor, a magnetic sensor, a pressure sensor, or a temperature sensor.

The communication component 1316 is configured to facilitate wired or wireless communication between the device 1300 and other devices. The device 1300 may access a wireless network based on a communication standard, such as Wi-Fi, 4G, 5G, or a combination thereof. In an example, the communication component 1316 receives broadcast signals or broadcast related information from an external broadcast management system via a broadcast channel. In an example, the communication component 1316 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth^{®} (BT) technology and other technologies.

In one or more examples, the device 1300 may be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic component for performing the above methods.

In one or more examples, there is also provided a non-transitory computer-readable storage medium including instructions, such as the memory 1304 including instructions. These instructions may be executed by the one or more processors 1320 of the device 1300 to complete the above methods. For example, the non-transitory computer-readable storage medium may be a read-only memory (ROM), a random access memory (RAM), a CD-ROM, a magnetic tape, a floppy disk, an optical data storage device, and the like.

Based on the same concept as the method examples, the present invention also provides a communication apparatus. The communication apparatus may be equipped with the functions of the network device 101 in the method examples and is configured to perform the step(s) performed by the network device 101 provided in the above examples. The functions may be implemented by hardware, or by corresponding software executed by hardware. The hardware or software includes one or more modules corresponding to the above functions.

In a possible implementation, the communication apparatus 1400 as illustrated in FIG. 14 may serve as the network device 101 involved in the above method examples, and perform the step(s) performed by the network device 101 in the method examples.

The communication apparatus 1400 as illustrated in FIG. 14 includes a transceiving module 1401.

The transceiving module 801 is configured to receive measurement capability indication information from UE. The measurement capability indication information indicates a measurement capability of whether the UE supports simultaneous measurements on cells corresponding to N different satellites within a same measurement window when performing a neighbor cell measurement, where N is an integer greater than 1.

In some possible implementations, the method further includes:
receiving a neighbor cell measurement report from the UE. The neighbor cell measurement report includes measurement results of the simultaneous measurements on the cells corresponding to the N different satellites within the same measurement window.

In some possible implementations, at least two of the N different satellites correspond to different satellite types, with different satellite types corresponding to different satellite orbit altitude ranges.

In some possible implementations, the cells corresponding to the N different satellites are intra-frequency cells. Alternatively, the cells corresponding to at least two of the N different satellites are inter-frequency cells.

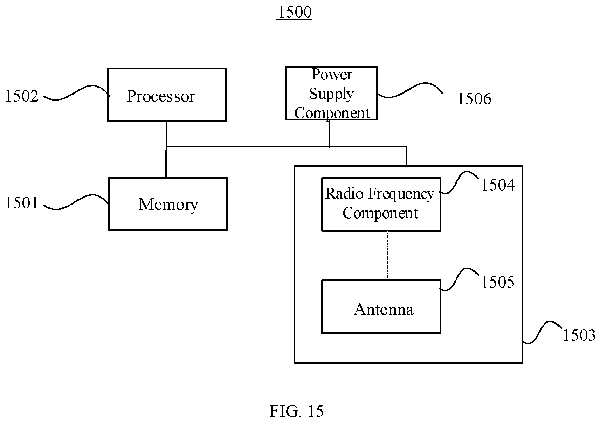

When being a network device, the structure of a communication device may further be as illustrated in FIG. 15. The structure of the communication device is described by taking the network device 101 as a base station as an example. As illustrated in FIG. 15, the device 1500 includes a memory 1501, a processor 1502, a transceiving component 1503, and a power supply component 1506. The memory 1501 is coupled to the processor 1502 and may be configured to store programs and data required by the communication device 1500 to implement various functions. The processor 1502 is configured to support the communication device 1500 to perform the corresponding functions in the above methods. These functions may be implemented by calling the programs stored in the memory 1501. The transceiving component 1503 may be a wireless transceiver, which may be configured to support the communication device 1500 to receive signaling and/or data and send signaling and/or data through a wireless air interface. The transceiving component 1503 may also be referred to as a transceiving unit or a communication unit. The transceiving component 1503 may include a radio frequency component 1504 and one or more antennas 1505. The radio frequency component 1504 may be a remote radio-frequency unit (RRU), which may be specifically configured to transmit radio frequency signals and convert between radio frequency signals and baseband signals. The one or more antennas 1505 may be specifically configured to radiate and receive radio frequency signals.

When the communication device 1500 is to send data, the processor 1502 may perform a baseband processing on the data to be sent and output the baseband signals to a radio-frequency unit. The radio-frequency unit performs a radio-frequency processing on the baseband signals and then sends the radio-frequency signals in the form of electromagnetic waves through the one or more antennas. When data is sent to the communication device 1500, the radio-frequency unit receives the radio-frequency signals through the one or more antennas, converts the radio-frequency signals into baseband signals, and outputs the baseband signals to the processor 1502. The processor 1502 converts the baseband signals into data and processes the data.

Other implementations of the examples of the present invention will be readily apparent to those skilled in the art after implementing the present invention by referring to the description. The present invention is intended to cover any variations, uses, or adaptations of the present invention that are in accordance with the general principles thereof and include common general knowledge or conventional technical means in the art that are not disclosed in the present invention. The description and the examples are only illustrative, and the scope and spirit of the examples of the present invention are to be indicated by appended claims.

It is to be understood that the examples of the present invention are not limited to the precise structures described above and illustrated in the accompanying drawings, and that various modifications and changes may be made without departing from the scope thereof. The scope of the examples of the present invention is limited only by the appended claims.

### INDUSTRIAL PRACTICALITY

By sending measurement capability indication information to a network device, the UE informs a measurement capability of whether to support simultaneous measurements on cells corresponding to N different satellites within a same measurement window when performing a neighbor cell measurement, so that the network device accurately learns the measurement capability of the UE, and thereby applies the measurement capability to appropriate scheduling processing.

## Claims

1. A measurement capability sending method, performed by user equipment, UE, the measurement capability sending method comprising:
sending measurement capability indication information to a network device, wherein the measurement capability indication information indicates a measurement capability of whether the UE supports simultaneous measurements on cells corresponding to N different satellites within a same measurement window when performing a neighbor cell measurement, and wherein N is an integer greater than 1.

2. The method according to claim 1, further comprising:
sending a neighbor cell measurement report to the network device, wherein the neighbor cell measurement report comprises measurement results of the simultaneous measurements on the cells corresponding to the N different satellites within the same measurement window.

3. The method according to claim 1 or 2,
wherein at least two of the N different satellites correspond to different satellite types, and wherein different satellite types correspond to different satellite orbit altitude ranges.

4. The method according to claim 1 or 2, wherein
the cells corresponding to the N different satellites are intra-frequency cells, or
the cells corresponding to at least two of the N different satellites are inter-frequency cells.

5. A measurement capability receiving method, performed by a network device, the measurement capability receiving method comprising:
receiving measurement capability indication information from user equipment, UE, wherein the measurement capability indication information indicates a measurement capability of whether the UE supports simultaneous measurements on cells corresponding to N different satellites within a same measurement window when performing a neighbor cell measurement, and wherein N is an integer greater than 1.

6. The method according to claim 5, further comprising:
receiving a neighbor cell measurement report from the UE, wherein the neighbor cell measurement report comprises measurement results of the simultaneous measurements on the cells corresponding to the N different satellites within the same measurement window.

7. The method according to claim 5 or 6,
wherein at least two of the N different satellites correspond to different satellite types, and wherein different satellite types correspond to different satellite orbit altitude ranges.

8. The method according to claim 5 or 6, wherein
the cells corresponding to the N different satellites are intra-frequency cells, or
the cells corresponding to at least two of the N different satellites are inter-frequency cells.

9. A measurement capability sending apparatus, configured for user equipment, UE, the apparatus comprises:
a transceiving module, configured to send measurement capability indication information to a network device, wherein the measurement capability indication information indicates a measurement capability of whether the UE supports simultaneous measurements on cells corresponding to N different satellites within a same measurement window when performing a neighbor cell measurement, and wherein N is an integer greater than 1.

10. A user equipment, UE, capability receiving apparatus, configured for a network device, the apparatus comprises:
a transceiving module, configured to receive measurement capability indication information from UE, wherein the measurement capability indication information indicates a measurement capability of whether the UE supports simultaneous measurements on cells corresponding to N different satellites within a same measurement window when performing a neighbor cell measurement, and wherein N is an integer greater than 1.

11. An electronic device, comprising
one or more processors, and
one or more memories,
wherein the one or more memories are configured to store a computer program; and
wherein the one or more processors are configured to execute the computer program to implement the method according to any one of claims 1-4.

12. A communication device, comprising
one or more processors, and
one or more memories,
wherein the one or more memories are configured to store a computer program; and
wherein the one or more processors are configured to execute the computer program to implement the method according to any one of claims 5-8.

13. A computer-readable storage medium, in which instructions are stored, wherein the instructions, when called and executed on a computer, enable the computer to perform the method according to any one of claims 1-4.

14. A computer-readable storage medium, in which instructions are stored, wherein the instructions, when called and executed on a computer, enable the computer to perform the method according to any one of claims 5-8.
